# EUROPEAN PATENT APPLICATION

(11) **EP 4 593 104 A1**
(43) Date of publication of application: **30.07.2025**
(21) Application number: 24223737.8
(22) Date of filing: 30.12.2024
(51) Int. Cl.: H01M 4/131, C01G 53/50, H01M 4/36, H01M 4/525, H01M 10/0525

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 04.01.2024 KR 20240001653
(71) Applicant: SAMSUNG SDI CO., LTD., Yongin-si, Gyeonggi-do 17084 (KR)
(72) Inventor: KIM, Young-Ki, 17084 Yongin-si (KR); LEE, Soonrewl, 17084 Yongin-si (KR); CHOO, Sung Ho, 17084 Yongin-si (KR); KANG, Byungwuk, 17084 Yongin-si (KR); JEONG, Jaeyong, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR)
(74) Representative: Marks & Clerk LLP

(57) **Abstract**

A positive electrode active material for rechargeable lithium batteries includes: a first positive electrode active material including a first lithium nickel-based composite oxide and being in a form of secondary particles having an average particle diameter (D₅₀) of about 10 µm to about 25 µm; a second positive electrode active material including a second lithium nickel-based composite oxide and being in a form of secondary particles having an average particle diameter (D₅₀) of about 0.5 µm to about 8 µm; and a third positive electrode active material including a third lithium nickel-based composite oxide and being in a form of secondary particles including a plurality of primary particles, wherein an average particle diameter (D₅₀) of the secondary particles is about 0.5 µm to about 8 µm, and the primary particles constituting the secondary particles of the third positive electrode active material are needle-shaped.

## Description

### BACKGROUND

### 1. Field

One or more embodiments of the present disclosure relate to positive electrode active materials, preparation methods thereof, positive electrodes including the positive electrode active materials, and rechargeable lithium batteries including the positive electrodes.

### 2. Description of the Related Art

A portable information device, such as a cell phone, a laptop, a smart phone, and/or the like, and/or an electric vehicle have used a rechargeable lithium battery having relatively high energy density and easy portability as a driving power source. Recently, research has been actively conducted to use a rechargeable lithium battery with high energy density as a driving power source for hybrid or electric vehicles and/or a power storage power source for an energy storage system (ESS) or a power wall.

Various positive electrode active materials have been investigated to achieve or realize rechargeable lithium batteries for applications to such uses. Among them, lithium nickel-based oxide, lithium nickel manganese cobalt composite oxide, lithium nickel cobalt aluminium composite oxide, and/or lithium cobalt oxide are mainly used as positive electrode active materials. The nickel-based positive electrode active materials are materials that are being actively developed because they can achieve relatively high capacity and relatively high energy density; however, a synthesis process thereof is relatively simple, and thus there are limits to improving the characteristics of the positive electrode active materials through the process. That is, active development is underway for nickel-based positive electrode materials due to their ability to attain relatively high capacity and energy density. However, the simplicity of their synthesis process presents certain limitations in further enhancing the properties of these materials.

### SUMMARY

One or more aspects of embodiments of the present disclosure are directed toward a positive electrode active material that has high initial discharge capacity and high initial charge/discharge efficiency and may realize long cycle-life characteristics thereof, and a preparation method thereof.

Additional aspects will be set forth in part in the description which follows and, in part, will be apparent from the description, or may be learned by practice of the presented embodiments.

In one or more embodiments, a positive electrode active material includes a first positive electrode active material that includes a first lithium nickel-based composite oxide and is in a form of secondary particles formed by agglomerating a plurality of primary particles, wherein an average particle diameter (D₅₀) of the secondary particles is about 10 micrometers (µm) to about 25 µm, a second positive electrode active material that includes a second lithium nickel-based composite oxide and is in a form of secondary particles formed by agglomerating a plurality of primary particles, wherein an average particle diameter (D₅₀) of the secondary particles is about 0.5 µm to about 8 µm, and a third positive electrode active material that includes a third lithium nickel-based composite oxide and is in a form of secondary particles formed by agglomerating a plurality of primary particles, wherein an average particle diameter (D₅₀) of the secondary particles is about 0.5 µm to about 8 µm, and wherein the primary particles constituting the secondary particles of the third positive electrode active material are needle-shaped (e.g., in a form of needles), and a nickel content (e.g., amount) of the third lithium nickel-based composite oxide based on 100 mol% of a total metal excluding lithium in the third lithium nickel-based composite oxide is higher than a nickel content (e.g., amount) of the second lithium nickel-based composite oxide based on 100 mol% of a total metal excluding lithium in the second lithium nickel-based composite oxide.

In one or more embodiments, a method of preparing a positive electrode active material includes mixing a first nickel-based hydroxide having an average particle diameter (D₅₀) of about 10 µm to about 25 µm and a first lithium raw material so that a molar ratio of lithium in the first lithium raw material to a total metal of the first nickel-based hydroxide is greater than or equal to about 1.09, and performing a first heat treatment to obtain a first heat treatment product, and mixing the first heat treatment product, a second nickel-based hydroxide having an average particle diameter (D₅₀) of about 0.5 µm to about 8 µm, and a second lithium raw material and performing a second heat treatment.

In one or more embodiments, a positive electrode for a rechargeable lithium battery includes the positive electrode active material.

In one or more embodiments, a rechargeable lithium battery includes the positive electrode, a negative electrode, and an electrolyte.

At least some of the above and other features of the invention are set out in the claims.

The positive electrode active material prepared according to one or more embodiments of the present disclosure has high initial charge and discharge efficiency and is capable of implementing long cycle-life characteristics.

### BRIEF DESCRIPTION OF THE DRAWINGS

The above and other aspects, features, and advantages of certain embodiments of the present disclosure will be more apparent from the following description taken in conjunction with the accompanying drawings.
FIGS. 1 - 4 are each a schematic diagram showing a rechargeable lithium battery according to one or more embodiments of the present disclosure.
FIG. 5 is a scanning electron microscopy (SEM) image of the positive electrode active material prepared in Example 1.
FIG. 6 is an SEM image of a cross-section of the positive electrode active material prepared in Example 1.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology used herein is used to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising," "include(s)/including," or "have(has)/having" are intended to designate the presence of an embodied feature, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, may be exaggerated for clarity and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present therebetween. In contrast, if (e.g., when) an element is referred to as being "directly on" another element, there are no intervening elements present.

In addition, "layer" as used herein may include not only a shape or a layer formed on the whole surface if (e.g., when) viewed from a plan view, but also a shape or a layer formed on a partial surface.

In one or more embodiments, an average particle diameter may be measured by a method well suitable (known) to those skilled in the art, for example, by a particle size analyzer, for example, HORIBA, LA-950 laser particle size analyzer, or by a transmission electron microscope (TEM) or a scanning electron microscope (SEM). In one or more embodiments, an average particle diameter value may be obtained by measuring it using a dynamic light scattering method, performing data analysis, counting the number of particles for each particle size range, and calculating from the data. Unless otherwise defined, the average particle diameter may refer to a diameter (D₅₀) of particles having a cumulative volume of 50 volume% in a particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In one or more embodiments, as used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "metal" is interpreted as a concept including ordinary metals, transition metals, and metalloids (semi-metals). And the term "Group" as utilized herein refers to a group of the Periodic Table of Elements according to the 1 to 18 grouping system of the International Union of Pure and Applied Chemistry ("IUPAC").

### Positive Electrode Active Material

According to one or more embodiments of the present disclosure, a positive electrode active material for a rechargeable lithium battery includes a first positive electrode active material, a second positive electrode active material, and a third positive electrode active material. The first positive electrode active material includes a first lithium nickel-based composite oxide and is in a form of secondary particles formed by agglomerating a plurality of primary particles, wherein an average particle diameter (D₅₀) of the secondary particles is about 10 µm to about 25 µm. The second positive electrode active material includes a second lithium nickel-based composite oxide and is in a form of secondary particles formed by agglomerating a plurality of primary particles, wherein an average particle diameter (D₅₀) of the secondary particles is about 0.5 µm to about 8 µm. The third positive electrode active material includes a third lithium nickel-based composite oxide and is in a form of secondary particles formed by agglomerating a plurality of primary particles, wherein an average particle diameter (D₅₀) of the secondary particles is about 0.5 µm to about 8 µm. The primary particles in the secondary particles of the third positive electrode active material are needle-shaped (e.g., in a form of needles). Herein, a nickel content (e.g., amount) of the third lithium nickel-based composite oxide based on 100 mol% of a total metal excluding lithium in the third lithium nickel-based composite oxide is higher than a nickel content (e.g., amount) of the second lithium nickel-based composite oxide based on 100 mol% of a total metal excluding lithium in the second lithium nickel-based composite oxide. As such, the positive electrode active material may achieve relatively high efficiency and long cycle-life characteristics.

A nickel-based positive electrode active material, which is a mixture of large secondary particles and small secondary particles, is generally prepared by concurrently (e.g., simultaneously) firing a large particle precursor, a small particle precursor, and a lithium raw material and then optionally coating them. In contrast, in one or more embodiments of the present disclosure, as described in more detail later, a step (e.g., act or task)-by-step (e.g., act or task) synthesis method is provided in which a large particle precursor and a lithium raw material are first mixed and fired, and then a small particle precursor and a lithium raw material are added thereto and second fired. In the embodiments, when mixing the lithium raw material with the large particle precursor, lithium is excessively mixed to a certain level to synthesize lithium-rich large particles, and the small particle precursor is then added to cause a reaction, so that the lithium-rich large particles come into contact with a portion of the small particle precursor. Accordingly, the small particle precursor reacted with the lithium-rich large particles is formed into small particles with a higher nickel content (e.g., amount) than that of the small particle precursor due to diffusion of nickel from the large particles, and as a result, the primary particles that constitute the secondary particles of this small particles are needle-shaped. As the nickel content (e.g., amount) increases, the small particles including needle-shaped primary particles are referred to as the third positive electrode active material.

Because a portion of the small particle precursor does not react directly with the lithium-rich large particles, there are also small particles that have the same nickel content (e.g., amount) as that of the small particle precursor and do not include needle-shaped primary particles, which are referred to as a second positive electrode active material. The large particles (i.e., lithium-rich large particles) correspond to the first positive electrode active material. That is, some of the small particle precursor does not directly react with the lithium-rich large particles. Consequently, there are additional small particles with the same nickel content (e.g., amount) as the small particle precursor, but without needle-shaped primary particles. These additional small particles are referred to as a second positive electrode active material. The large particles (i.e., lithium-rich large particles) correspond to the first positive electrode active material.

According to the synthesis method of one or more embodiments, the reactivity of the positive electrode active material precursors and the lithium raw material is further improved, thereby improving processability, and the positive electrode active material synthesized using this method has a higher initial discharge capacity, significantly improved initial charge and discharge efficiency, and improved cycle-life characteristics compared to a positive electrode active material prepared by the existing method in the art.

The nickel content (e.g., amount) of the third lithium nickel-based composite oxide based on 100 mol% of a total metal excluding lithium in the third lithium nickel-based composite oxide may be, for example, about 1 mol% to about 5 mol%, for example, about 1 mol% to about 4 mol%, or about 2 mol% to about 3 mol% higher than the nickel content (e.g., amount) of the second lithium nickel-based composite oxide based on 100 mol% of a total metal excluding lithium in the second lithium nickel-based composite oxide.

As the nickel content (e.g., amount) of the third positive electrode active material increases compared to the precursor thereof, a content (e.g., amount) of metal components other than lithium and nickel decreases. For example, in one or more embodiments, the second lithium nickel-based composite oxide and the third lithium nickel-based composite oxide may further include metal M other than lithium and nickel. In the embodiments, a content (e.g., amount) of the metal M in the third lithium nickel-based composite oxide based on 100 mol% of a total metal excluding lithium in the third lithium nickel-based composite oxide may be lower than a content (e.g., amount) of the metal M in the second lithium nickel-based composite oxide based on 100 mol% of a total metal excluding lithium in the second lithium nickel-based composite oxide, and, for example, it may be lower by about 1 mol% to about 5 mol%, about 1 mol% to about 4 mol%, or about 2 mol% to about 3 mol%.

Hereinafter, each positive electrode active material will be described in more detail.

### First Positive Electrode Active Material

The first positive electrode active material includes a first lithium nickel-based composite oxide and is in a form of secondary particles formed by agglomerating a plurality of primary particles, wherein an average particle diameter (D₅₀) of the secondary particles is about 10 µm to about 25 µm. The first positive electrode active material may be expressed as large particles. The average particle diameter (D₅₀) of the secondary particles of the first positive electrode active material may be, for example, about 10 µm to about 20 µm, about 10 µm to about 18 µm, or about 12 µm to about 16 µm.

The shape of the secondary particles of the first positive electrode active material may be, for example, a spherical shape, an ellipsoidal shape, a polygonal shape, an irregular shape, or a (e.g., any suitable) combination thereof, but for example, it may not be a needle-shape. Herein, the polygonal shape refers to a three-dimensional shape with multiple angles, such as polygonal prisms, polygonal pyramids, and polyhedrons. The shape of the primary particles constituting the secondary particles of the first positive electrode active material may be, for example, a spherical shape, an ellipsoidal shape, a polygonal shape, a plate shape (e.g., in a form of plates), an irregular shape, or a (e.g., any suitable) combination thereof, but for example, may not be a needle-shape. Unlike the third positive electrode active material, the first positive electrode active material may not include (e.g., may exclude) needle-shaped primary particles.

A nickel content (e.g., amount) based on 100 mol% of a total metal excluding lithium in the first lithium nickel-based composite oxide may be, for example, about 50 mol% to about 99 mol%, for example, about 50 mol% to about 90 mol%, about 50 mol% to about 80 mol%, about 50 mol% to about 70 mol%, about 55 mol% to about 70 mol%, or about 55 mol% to about 65 mol%. For example, in one or more embodiments, the first positive electrode active material may be a mid-nickel positive electrode active material containing about 55 mol% to about 70 mol% of nickel based on 100 mol% of a total metal excluding lithium in the first lithium nickel-based composite oxide.

The first lithium nickel-based composite oxide and the second lithium nickel-based composite oxide may have the same or different compositions. Likewise, the first lithium nickel-based composite oxide and the third lithium nickel-based composite oxide may have the same or different compositions. However, the second lithium nickel-based composite oxide and the third lithium nickel-based composite oxide may have different compositions because there is a difference in nickel content (e.g., amount).

The first lithium nickel-based composite oxide may be represented by Chemical Formula 1, for example, may be represented by Chemical Formula 2 as a specific example.

**Chemical Formula 1** **Liₐ₁Niₓ₁M¹_{y1}O_{2-b1}X_{b1}**

In Chemical Formula 1, 0.9≤a1≤1.2, 0.5≤x1<1, 0<y1≤0.5, 0.9≤x1+y1≤1.1, and 0≤b1≤0.1, M¹ may be one or more elements selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), yttrium (Y), zinc (Zn), and zirconium (Zr), and X may be one or more elements selected from among fluorine (F), phosphorous (P), and sulfur (S).

In one or more embodiments, in Chemical Formula 1, 0.5≤x1≤0.9 and 0.1≤ y1≤0.5, 0.5≤x1 ≤0.8 and 0.2≤y1≤0.5, 0.5≤x1 ≤0.7 and 0.3≤y1≤0.5, or 0.55≤x1≤0.7 and 0.3≤y1≤0.45.

**Chemical Formula 2** **Liₐ₂Niₓ₂Co_{y2}M²_{z2}M³_{w2}O_{2-b2}X_{b2}**

In Chemical Formula 2, 0.9≤a2≤1.2, 0.5≤x2<1, 0<y2≤0.5, 0<z2≤0.5, 0≤w2 ≤0.1, 0.9≤x2+y2+z2+w2≤1.1, and 0≤b2≤0.1, M² may be one or more elements selected from among Al, Mn, and/or a (e.g., any suitable) combination thereof, M³ may be one or more elements selected from among B, Ba, Ca, Ce, Cr, Cu, Fe, Mg, Mo, Nb, Si, Sn, Sr, Ti, V, W, Y, Zn, and Zr, and X may be one or more elements selected from among F, P, and S.

In one or more embodiments, in Chemical Formula 2, 0.5≤x2≤0.8, 0.1≤y2≤ 0.4, 0.1≤z2≤0.4, and 0≤w2≤0.1, 0.5≤x2≤0.7, 0.2≤y2≤0.4, 0.1≤z2≤0.3, and 0≤w2≤ 0.1, 0.5≤x2≤0.7, 0.1≤y2≤0.3, 0.2<z2≤0.4, and 0≤w2≤0.1, or 0.5≤x2≤0.6, 0.2≤y2≤ 0.3, 0.2≤z2≤0.3 and 0≤w2≤0.1.

In one or more embodiments, the first positive electrode active material may include core particles including a first lithium nickel-based composite oxide, and a coating layer located on the surface of each of the core particles. The coating layer may include, for example, Al, B, Co, Mg, Si, Ti, V, W, Zn, Zr, and/or a (e.g., any suitable) combination thereof, as a coating element, for example, in one or more embodiments, may include aluminium as a coating element. A content (e.g., amount) of the coating element based on 100 wt% of a total metal excluding lithium in the first positive electrode active material may be about 0.1 wt% to about 5 wt%, about 0.1 wt% to about 3 wt%, about 0.1 wt% to about 2 wt%, about 0.1 wt% to about 1 wt%, or about 0.1 wt% to about 0.9 wt%.

### Second Positive Electrode Active Material

The second positive electrode active material includes a second lithium nickel-based composite oxide, and is in the form of secondary particles formed by agglomerating a plurality of primary particles, and an average particle diameter (D₅₀) of the secondary particles is about 0.5 µm to about 8 µm. The second positive electrode active material may be expressed as small particles, or may be expressed as a portion of small particles. The average particle diameter (D₅₀) of the secondary particles of the second positive electrode active material may be, for example, about 0.5 µm to about 6 µm, about 1 µm to about 5 µm, or about 2 µm to about 4 µm.

This may refer to that the second positive electrode active material maintains substantially the same composition as the small particle precursor and that the primary particles are not formed in a needle shape. For example, the secondary particles of the second positive electrode active material may not include (e.g., may exclude) needle-shaped primary particles, unlike the third positive electrode active material. The shape of the primary particles of the second positive electrode active material may be, for example, a spherical shape, an ellipsoidal shape, a polygonal shape, a plate shape (e.g., in a form of plates), an irregular shape, or a (e.g., any suitable) combination thereof. The shape of the secondary particles of the second positive electrode active material may be, for example, a spherical shape, an ellipsoidal shape, a polygonal shape, an irregular shape, or a (e.g., any suitable) combination thereof, but, for example, may not be a needle-shape.

A nickel content (e.g., amount) based on 100 mol% of a total metal excluding lithium in the second lithium nickel-based composite oxide may be, for example, about 50 mol% to about 99 mol%, for example, about 50 mol% to about 90 mol%, about 50 mol% to about 80 mol%, about 50 mol% to about 70 mol%, about 55 mol% to about 70 mol%, or about 55 mol% to about 65 mol%. For example, in one or more embodiments, the second positive electrode active material may be a mid-nickel positive electrode active material containing about 55 mol% to about 70 mol% of nickel based on 100 mol% of a total metal excluding lithium in the second lithium nickel-based composite oxide.

The second lithium nickel-based composite oxide may be represented by Chemical Formula 3 as an example, or may be represented by Chemical Formula 4 as a specific example.

**Chemical Formula 3** **Liₐ₃Niₓ₃M⁴_{y3}O_{2-b3}X_{b3}**

In Chemical Formula 3, 0.9≤a3≤1.2, 0.5≤x3<1, 0<y3≤0.5, 0.9≤x3+y3≤1.1, and 0≤b3≤0.1, M⁴ may be one or more elements selected from among Al, B, Ba, Ca, Ce, Co, Cr, Cu, Fe, Mg, Mn, Mo, Nb, Si, Sn, Sr, Ti, V, W, Y, Zn, and Zr, and X may be one or more elements selected from among F, P, and S.

In one or more embodiments, in Chemical Formula 3, 0.5≤x3≤0.9 and 0.1≤ y3≤0.5, 0.5≤x3≤0.8 and 0.2≤y3≤0.5, 0.5≤x3≤0.7 and 0.3≤y3≤0.5, or 0.55≤x3≤0.7 and 0.3≤y3≤0.45.

Chemical Formula **4** **Liₐ₄Niₓ₄Co_{y4}M⁵_{z4}M⁶_{w4}O_{2-b4}X_{b4}**

In Chemical Formula 4, 0.9≤a4≤1.2, 0.5≤x4<1, 0<y4≤0.5, 0<z4≤0.5, 0≤w4 ≤0.1, 0.9≤x4+y4+z4+w4≤1.1, and 0≤b4≤0.1, M⁵ may be Al, Mn, or a (e.g., any suitable) combination thereof, M⁶ may be one or more elements selected from among B, Ba, Ca, Ce, Cr, Cu, Fe, Mg, Mo, Nb, Si, Sn, Sr, Ti, V, W, Y, Zn, and Zr, and X may be one or more elements selected from among F, P, and S.

In one or more embodiments, in Chemical Formula 4, 0.5≤x4≤0.8, 0.1≤y4≤ 0.4, 0.1≤z4≤0.4, and 0≤w4≤0.1, 0.5≤x4≤0.7, 0.2≤y4≤0.4, 0.1≤z4≤0.3, and 0≤w4≤ 0.1, 0.5≤x4≤0.7, 0.1≤y4≤0.3, 0.2≤z4≤0.4, and 0≤w4≤0.1, or 0.5≤x4≤0.6, 0.2≤y4≤ 0.3, 0.2≤z4≤0.3 and 0≤w4≤0.1.

In one or more embodiments, the second positive electrode active material may include core particles including a second lithium nickel-based composite oxide, and a coating layer located on the surface of each of the core particles. The coating layer may include, for example, Al, B, Co, Mg, Si, Ti, V, W, Zn, Zr, and/or a (e.g., any suitable) combination thereof, as a coating element, for example, in one or more embodiments, may include aluminium as a coating element. A content (e.g., amount) of the coating element based on 100 wt% of a total metal excluding lithium in the second positive electrode active material may be about 0.1 wt% to about 5 wt%, about 0.1 wt% to about 3 wt%, about 0.1 wt% to about 2 wt%, about 0.1 wt% to about 1 wt%, or about 0.1 wt% to about 0.9 wt%.

### Third Positive Electrode Active Material

The third positive electrode active material includes a third lithium nickel-based composite oxide, and is in the form of secondary particles formed by agglomerating a plurality of primary particles, wherein an average particle diameter (D₅₀) of the secondary particles is about 0.5 µm to about 8 µm and the secondary particles include needle-shaped primary particles. The third positive electrode active material may be expressed as small particles, or may be expressed as a portion of small particles. An average particle diameter (D₅₀) of the secondary particles of the third positive electrode active material may be, for example, about 0.5 µm to about 6 µm, about 1 µm to about 5 µm, or about 2 µm to about 4 µm.

The third positive electrode active material may be small particles formed by reacting the lithium-rich large particles and the small particle precursor in contact with each other in the method of manufacturing the positive electrode active material described in more detail later. Its nickel content (e.g., amount) is higher than that of the small particle precursor by receiving nickel from the large particle, and the shape of the primary particle is needle-shaped (e.g., needle-like). However, the secondary particles of the third positive electrode active material are not needle-shaped, and may have, for example, a spherical shape, an ellipsoidal shape, a polygonal shape, an irregular shape, and/or a (e.g., any suitable) combination thereof.

A nickel content (e.g., amount) based on 100 mol% of a total metal excluding lithium in the third lithium nickel-based composite oxide may be, for example, about 50 mol% to about 99 mol%, for example, about 50 mol% to about 90 mol%, about 50 mol% to about 80 mol%, about 50 mol% to about 70 mol%, about 55 mol% to about 70 mol%, or about 55 mol% to about 65 mol%. For example, in one or more embodiments, the third positive electrode active material may be a mid-nickel positive electrode active material containing about 55 mol% to about 70 mol% of nickel based on 100 mol% of a total metal excluding lithium in the third lithium nickel-based composite oxide.

The third lithium nickel-based composite oxide may be represented by Chemical Formula 5, for example, by Chemical Formula 6, as a specific example.

**Chemical Formula 5** **Liₐ₅Niₓ₅M⁷_{y5}O_{2-b5}X_{b5}**

In Chemical Formula 5, 0.9≤a5≤1.2, 0.5≤x5<1, 0<y5≤0.5, 0.9≤x5+y5≤1.1, and 0≤b5≤0.1, M⁷ may be one or more elements selected from among Al, B, Ba, Ca, Ce, Co, Cr, Cu, Fe, Mg, Mn, Mo, Nb, Si, Sn, Sr, Ti, V, W, Y, Zn, and Zr, and X may be one or more elements selected from among F, P, and S.

In one or more embodiments, in Chemical Formula 5, 0.5≤x5≤0.9 and 0.1≤ y5≤0.5, 0.5≤x5≤0.8 and 0.2≤y5≤0.5, 0.5≤x5≤0.7 and 0.3≤y5≤0.5, or 0.55≤x5≤0.7 and 0.3≤y5≤0.45.

**Chemical Formula 6** **Liₐ₆Niₓ₆Co_{y6}M⁸_{z6}M⁹_{w6}O_{2-b6}X_{b6}**

In Chemical Formula 6, 0.9≤a6≤1.2, 0.5≤x6<1, 0<y6≤0.5, 0<z6≤0.5, 0≤w6 ≤0.1, 0.9≤x6+y6+z6+w6≤1.1, and 0≤b6≤0.1, M⁸ may be Al, Mn, and/or a (e.g., any suitable) combination thereof, M⁹ may be one or more elements selected from among B, Ba, Ca, Ce, Cr, Cu, Fe, Mg, Mo, Nb, Si, Sn, Sr, Ti, V, W, Y, Zn, and Zr, and X may be one or more elements selected from among F, P, and S.

In one or more embodiments, in Chemical Formula 6, 0.5≤x6≤0.8, 0.1≤y6≤ 0.4, 0.1≤z6≤0.4, and 0≤w6≤0.1, 0.5≤x6≤0.7, 0.2≤y6≤0.4, 0.1≤z6≤0.3, and 0≤w6≤ 0.1, 0.5≤x6≤0.7, 0.1≤y6≤0.3, 0.2≤z6≤0.4, and 0≤w6≤0.1, or 0.5≤x6≤0.6, 0.2≤y6≤ 0.3, 0.2≤z6≤0.3 and 0≤w6≤0.1.

In one or more embodiments, the third positive electrode active material may include core particles including a third lithium nickel-based composite oxide, and a coating layer located on the surface of each of the core particles. The coating layer may include, for example, Al, B, Co, Mg, Si, Ti, V, W, Zn, Zr, and/or a (e.g., any suitable) combination thereof, as a coating element, for example, in one or more embodiments, may include aluminium as a coating element. In the third positive electrode active material, a content (e.g., amount) of the coating element based on 100 wt% of a total metal excluding lithium may be about 0.1 wt% to about 5 wt%, about 0.1 wt% to about 3 wt%, about 0.1 wt% to about 2 wt%, about 0.1 wt% to about 1 wt%, or about 0.1 wt% to about 0.9 wt%.

Based on 100 wt% of a total weight of the first positive electrode active material, the second positive electrode active material, and the third positive electrode active material, the first positive electrode active material may be included in an amount of about 60 wt% to about 85 wt%, or about 70 wt% to about 80 wt%, and a sum amount of the second positive electrode active material and the third positive electrode active material may be about 15 wt% to about 40 wt%, or about 20 wt% to about 30 wt%. For example, the content (e.g., amount) of large particles may be about 60 wt% to about 85 wt%, or about 70 wt% to about 80 wt%, and a content (e.g., amount) of small particles may be about 15 wt% to about 40 wt%, or about 20 wt% to about 30 wt%. When the contents of large particles and small particles satisfy the above ranges, it is advantageous to prepare a highly efficient, long cycle-life positive electrode active material according to the preparation method according to one or more embodiments of the present disclosure.

A ratio of the second positive electrode active material and the third positive electrode active material is not particularly limited, but, for example, based on a total weight of 100 wt% of the second positive electrode active material and the third positive electrode active material, the second positive electrode active material may be included in about 10 wt% to about 90 wt% and the third positive electrode active material may be included in an amount of about 10 wt% to about 90 wt%. In one or more embodiments, based on a total weight of 100 wt% of the second positive electrode active material and the third positive electrode active material, the second positive electrode active material may be included in an amount of about 20 wt% to about 80 wt%, or about 30 wt% to about 70 wt%, and the third positive electrode active material may be included in an amount of about 20 wt% to about 80 wt%, or about 30 wt% to about 70 wt%. When the second positive electrode active material and the third positive electrode active material are mixed in an appropriate or suitable ratio, both (e.g., simultaneously) initial charge and discharge efficiency and cycle-life characteristics may be improved.

### Method of Preparing Positive Electrode Active Material

In one or more embodiments, a method of preparing a positive electrode active material includes (i) mixing a first nickel-based hydroxide having an average particle diameter (D₅₀) of about 10 µm to about 25 µm and a first lithium raw material so that a molar ratio of lithium in the first lithium raw material to a total metal of the first nickel-based hydroxide is greater than or equal to about 1.09. and performing a first heat treatment to obtain a first heat treatment product, and (ii) mixing the first heat treatment product, a second nickel-based hydroxide having an average particle diameter (D₅₀) of about 0.5 µm to about 8 µm, and a second lithium raw material and performing a second heat treatment.

The first nickel-based hydroxide may be a large particle precursor and the second nickel-based hydroxide may be a small particle precursor. According to the method, if (e.g., when) the large particle precursor and the first lithium raw material are mixed, a molar ratio of lithium in the first lithium raw material to metals in the first nickel-based hydroxide is designed to be about 1.09 or more to form lithium-rich large particles containing lithium in a set or predetermined amount or more during the first heat treatment. These lithium-rich large particles are once more heat-treated after adding the small particle precursor and the second lithium raw material thereto, so that a portion of the small particle precursor may directly contact and react the lithium-rich large particles, wherein the lithium is diffused thereinto from the lithium-rich large particles thereinto, forming small particles of the lithium nickel-based oxide. These small particles have a higher nickel content (e.g., amount) than that of the small particle precursor and needle-shaped primary particles. When the lithium is diffused from the surface of the lithium-rich large particles into the small particle precursor, nickel is understood to be diffused with the lithium, and this diffusion mechanism may cause the primary particles to be needle-shaped. This third positive electrode active material may further realize much higher capacity, and the needle-shaped primary particles may further promote movement of lithium ions and thus improve charging and discharging efficiency and output characteristics.

In general, in preparing a nickel-based positive electrode active material by mixing a positive electrode active material precursor and a lithium raw material and firing them, if the lithium raw material is added by designing a molar ratio of lithium to metals of the positive electrode active material precursor to be less than about 1, secondary particles including the needle-shaped primary particles may be synthesized, wherein there is a problem and issue of deteriorating charge/discharge capacity due to low lithium availability. In contrast, the third positive electrode active material according to one or more embodiments of the present disclosure receives lithium from the lithium-rich large particles and also is supplied with lithium from the second lithium raw material during the synthesis process, resultantly realizing high capacity without reducing the lithium availability.

In the method of preparing a positive electrode active material of the present disclosure, unlike the synthesis methods in the related art, the second lithium raw material is additionally added during the second heat treatment, further improving reactivity, and in addition, the small particle precursor may utilize lithium from the lithium-rich large particles, improving reaction efficiency.

A molar ratio of lithium of the first lithium raw material to total metals of the first nickel-based hydroxide may be designed to be greater than or equal to 1.09, for example, about 1.09 to about 1.2, about 1.09 to about 1.19, about 1.09 to about 1.15, or about 1.09 to about 1.12. If (e.g., when) the lithium mole ratio satisfies the ranges, the lithium-rich large particles may be effectively formed during the synthesis process, resultantly preparing a positive electrode active material with high efficiency and long cycle-life.

For example, in one or more embodiments, the first nickel-based hydroxide may be represented by Chemical Formula 11, or may be represented by Chemical Formula 12.

**Chemical Formula 11** **Niₓ₁₁M¹¹_{y11}(OH)₂**

In Chemical Formula 11, 0.5≤x11<1, 0<y11≤0.5, and 0.9≤x11+y11≤1.1, M¹¹ may be one or more elements selected from among Al, B, Ba, Ca, Ce, Co, Cr, Cu, Fe, Mg, Mn, Mo, Nb, Si, Sn, Sr, Ti, V, W, Y, Zn, and Zr.

In one or more embodiments, in Chemical Formula 11, 0.5≤x11≤0.9 and 0.1 ≤y11≤0.5, 0.5≤x11≤0.8 and 0.2≤y11≤0.5, 0.5≤x11≤0.7 and 0.3≤y11≤0.5, or 0.55≤ x11≤0.7 and 0.3≤y11≤0.45.

**Chemical Formula 12** **Niₓ₁₂Co_{y12}M¹²_{z12}M¹³_{w12}(OH)₂**

In Chemical Formula 12, 0.5≤x12<1, 0<y12≤0.5, 0<z12≤0.5, 0≤w12≤0.1, and 0.9≤x12+y12+z12+w12≤1.1, M¹² may be Al, Mn, or a (e.g., any suitable) combination thereof, and M¹³ may be one or more elements selected from among B, Ba, Ca, Ce, Cr, Cu, Fe, Mg, Mo, Nb, Si, Sn, Sr, Ti, V, W, Y, Zn, and Zr.

In one or more embodiments, in Chemical Formula 12, 0.5≤x12≤0.8, 0.1≤ y12≤0.4, 0.1≤z12≤0.4, and 0≤w12≤0.1, 0.5≤x12≤0.7, 0.2≤y12≤0.4, 0.1≤z12≤0.3, and 0≤w12≤0.1, 0.5≤x12≤0.7, 0.1≤y12≤0.3, 0.2≤z12≤0.4, and 0≤w12≤0.1, or 0.5≤ x12≤0.6, 0.2≤y12≤0.3, 0.2≤z12≤0.3 and 0≤w12≤0.1.

In the first nickel-based hydroxide, a nickel content (e.g., amount) based on 100 mol% of a total metal may be, for example, about 50 mol% to about 99 mol%, for example, about 50 mol% to about 90 mol%, about 50 mol% to about 80 mol%, about 50 mol% to about 70 mol%, about 55 mol% to about 70 mol%, or about 55 mol% to about 65 mol%.

The first nickel-based hydroxide and the second nickel-based hydroxide may have the same or different compositions. The first nickel-based hydroxide and the second nickel-based hydroxide may each be prepared by a general co-precipitation method.

The first nickel-based hydroxide may be secondary particles each formed by agglomerating a plurality of primary particles, and an average particle diameter (D₅₀) of the secondary particles may be about 10 µm to about 25 µm, for example, about 10 µm to about 20 µm, about 10 µm to about 18 µm, or about 12 µm to about 16 µm.

The first lithium raw material may include lithium carbonate, lithium hydroxide hydrate, anhydrous lithium hydroxide, and/or a (e.g., any suitable) combination thereof.

In one or more embodiments, when the first nickel-based hydroxide is mixed with the first lithium raw material, optionally a doping element raw material may be added therewith to proceed with the first heat treatment.

The first heat treatment may be performed under an oxygen atmosphere, for example, at 750 °C to 1000 °C, 750 °C to 900 °C, or 800 °C to 900 °C for 4 hours to 24 hours.

A product (e.g., first heat treatment product) of the first heat treatment may be large particles containing lithium nickel-based composite oxide, wherein the large particles include lithium in a set or predetermined excess content (e.g., amount).

A molar ratio of lithium of the second lithium raw material to total metals of the second nickel-based hydroxide may be less than about 1, for example, about 0.2 to about 0.99, about 0.4 to about 0.9, or about 0.6 to about 0.8. The second lithium raw material may be controlled or selected to have a lithium molar ratio within the ranges to further improve reactivity of the second heat treatment, obtaining a final positive electrode active material in which a lithium content (e.g., amount) is appropriately or suitably adjusted.

The second nickel-based hydroxide may be represented by Chemical Formula 13 as an example, or may be represented by Chemical Formula 14 as a specific example.

**Chemical Formula 13** **Niₓ₁₃M¹⁴_{y13}(OH)₂**

In Chemical Formula 13, 0.5≤x13<1, 0<y13≤0.5, and 0.9≤x13+y13≤1.1, M¹⁴ may be one or more elements selected from among Al, B, Ba, Ca, Ce, Co, Cr, Cu, Fe, Mg, Mn, Mo, Nb, Si, Sn, Sr, Ti, V, W, Y, Zn, and Zr.

In one or more embodiments, in Chemical Formula 13, 0.5≤x13≤0.9 and 0.1 ≤y13≤0.5, 0.5≤x13≤0.8 and 0.2≤y13≤0.5, 0.5≤x13≤0.7 and 0.3≤y13≤0.5, or 0.55≤ x13≤0.7 and 0.3≤y13≤0.45.

**Chemical Formula 14** **Niₓ₁₄Co_{y14}M¹⁵_{z14}M¹⁶_{w14}(OH)₂**

In Chemical Formula 14, 0.5≤x14<1, 0<y14≤0.5, 0<z14≤0.5, 0≤w14≤0.1, and 0.9≤x14+y14+z14+w14≤1.1, M¹⁵ may be Al, Mn, or a (e.g., any suitable) combination thereof, and M¹⁶ may be one or more elements selected from among B, Ba, Ca, Ce, Cr, Cu, Fe, Mg, Mo, Nb, Si, Sn, Sr, Ti, V, W, Y, Zn and Zr.

In one or more embodiments, in Chemical Formula 14, 0.5≤x14≤0.8, 0.1≤ y14≤0.4, 0.1≤z14≤0.4, and 0≤w14≤0.1, 0.5≤x14≤0.7, 0.2≤y14≤0.4, 0.1≤z14≤0.3, and 0≤w14≤0.1, 0.5≤x14≤0.7, 0.1≤y14≤0.3, 0.2≤z14≤0.4, and 0≤w14≤0.1, or 0.5≤ x14≤0.6, 0.2≤y14≤0.3, 0.2≤z14≤0.3 and 0≤w14≤0.1.

In the second nickel-based hydroxide, the nickel content (e.g., amount) may be, for example, about 50 mol% to about 99 mol%, for example, about 50 mol% to about 90 mol%, about 50 mol% to about 80 mol%, about 50 mol% to about 70 mol%, about 55 mol% to about 70 mol%, or about 55 mol% to about 65 mol% based on 100 mol% of the total metals.

The second nickel-based hydroxide may be secondary particles formed by agglomeration of a plurality of the primary particles, and the secondary particles may have an average particle diameter (D₅₀) of for example, about 0.5 µm to about 8 µm, about 0.5 µm to about 6 µm, about 1 µm to about 5 µm, or about 2 µm to about 4 µm. The primary particles forming the secondary particles of the second nickel-based hydroxide may not be needle-shaped. The needle-shaped primary particles of the third positive electrode active material may be formed during the second heat treatment process.

The second lithium raw material may include lithium carbonate, lithium hydroxide hydrate, anhydrous lithium hydroxide, and/or a (e.g., any suitable) combination thereof.

The second heat treatment may be performed under an oxygen atmosphere, for example, at about 700 °C to about 900 °C, or about 750 °C to about 850° C for about 4 hours to about 24 hours.

For example, in one or more embodiments, the first heat treatment temperature may be higher than the second heat treatment temperature. The first heat treatment temperature and the second heat treatment temperature may be respectively appropriately or suitably adjusted to effectively prepare a positive electrode active material with high efficiency and long cycle-life.

A ratio of the first nickel-based hydroxide to the second nickel-based hydroxide corresponds to a ratio of the large particles to the small particles, for example, a weight ratio of about 60:40 to about 85:15 or about 70:30 to about 80:20 may be used. If (e.g., when) the first nickel-based hydroxide and the second nickel-based hydroxide are mixed within the ratios, a positive electrode active material with high efficiency and a long cycle-life according to one or more embodiments may be effectively prepared.

In one or more embodiments, in order to proceed with coating of the positive electrode active material, if (e.g., when) the first heat treatment product, the second nickel-based hydroxide, and the second lithium raw material are mixed, a coating raw material may be added together thereto to proceed with the second heat treatment.

The coating raw material may include Al, B, Co, Mg, Si, Ti, V, W, Zn, Zr, and/or a (e.g., any suitable) combination thereof, as a coating element, and take one or more suitable forms such as oxides, hydroxides, nitrates, sulfates, and/or the like. A content (e.g., amount) of the coating raw material may include a coating element of about 0.1 wt% to about 5 wt% or about 0.1 wt% to about 3 wt% based on 100 wt% of the total metals excluding lithium in the final positive electrode active material.

For example, in one or more embodiments, the coating raw material may include aluminium, for example, aluminium oxide particles. Herein, an aluminium raw material may have an aluminium content (e.g., amount) of about 0.1 parts by weight to about 2 parts by weight based on 100 parts by weight of the total metals excluding lithium in the total of the first heat treatment product and the second nickel-based hydroxide, for example, about 0.1 parts by weight to about 1 part by weight or about 0.1 parts by weight to about 0.8 parts by weight. If (e.g., when) the aluminium coating proceeds within the ranges, initial discharge capacity, initial charge/discharge efficiency, and cycle-life characteristics may all be improved.

The method of preparing a positive electrode active material may further include a crushing process after the first heat treatment and/or the second heat treatment.

### Positive Electrode

In one or more embodiments, a positive electrode for a rechargeable lithium battery including the positive electrode active material of the present disclosure is provided. For example, in one or more embodiments, the positive electrode may include a positive electrode current collector, and a positive electrode active material layer on the positive electrode current collector, and the positive electrode active material layer includes the positive electrode active material of the present disclosure, and optionally a binder, a conductive material (e.g., electron conductor), and/or a (e.g., any suitable) combination thereof.

### Binder

The binder improves binding properties of positive electrode active material particles with one another and with the positive electrode current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

### Conductive Material

The conductive material may be included to provide electrode conductivity, and any electrically conductive material may be used as a conductive material unless it causes a chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of a total weight of the positive electrode active material layer.

The positive electrode current collector may include aluminium (Al), but embodiments of the present disclosure are not limited thereto.

### Rechargeable Lithium Battery

According to one or more embodiments of the present disclosure, a rechargeable lithium battery may include the aforementioned positive electrode, a negative electrode, and an electrolyte. In one or more embodiments, the rechargeable lithium battery may include the positive electrode, a negative electrode, a separator between the positive electrode and the negative electrode, and an electrolyte solution (i.e., electrolyte).

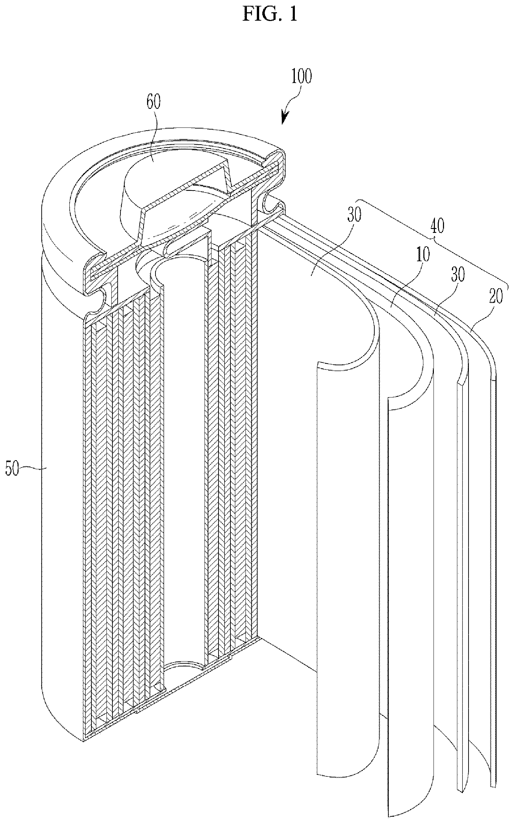

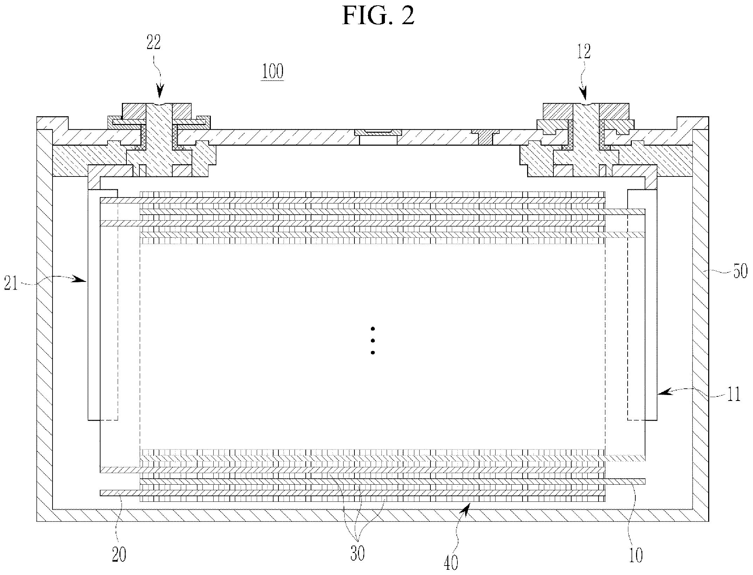

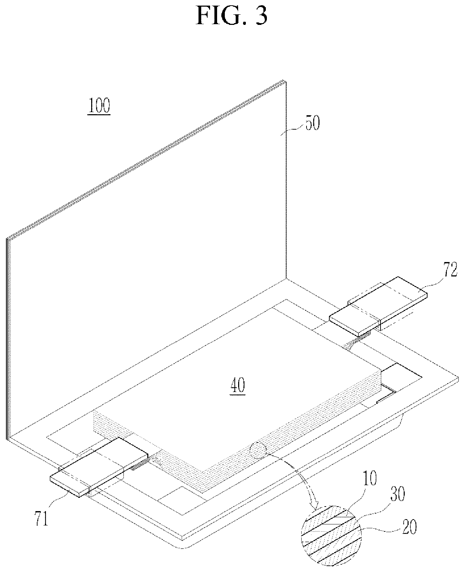

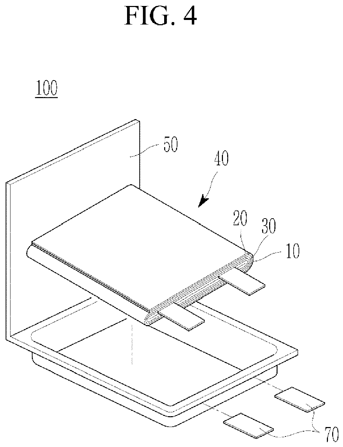

The rechargeable lithium battery may be classified into cylindrical, prismatic, pouch, coin, and/or the like, depending on the shape thereof. FIGS. 1 to 4 are each a schematic diagram showing a rechargeable lithium battery according to one or more embodiments, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 may include an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. In some embodiments, the rechargeable lithium battery 100 may include a sealing member 60 that seals the case 50 as shown in FIG. 1. In some embodiments, as shown in FIG. 2, the rechargeable lithium battery 100 may include a positive electrode lead tab 11, a positive electrode terminal 12, a negative lead tab 21, and a negative electrode terminal 22. In some embodiments, as shown in FIGS. 3 and 4, the rechargeable lithium battery 100 includes an electrode tab 70, that is, a positive electrode tab 71 and a negative electrode tab 72, serving as an electrical path for inducing the current formed in the electrode assembly 40 to the outside.

### Negative Electrode

The negative electrode may include a negative electrode current collector and a negative electrode active material layer on the negative electrode current collector, and the negative electrode active material layer may include a negative electrode active material, a binder, a conductive material (e.g., electron conductor), and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregularly shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include an alloy of lithium and one or more metals selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), polonium (Po), and/or a (e.g., any suitable) combination thereof), and/or a (e.g., any suitable) combination thereof. The Sn-based negative electrode active material may be Sn, SnOₓ (0 < x ≤ 2) (e.g., SnO₂), a Sn alloy, and/or a (e.g., any suitable) combination thereof.

The silicon-carbon composite may be a composite of silicon and amorphous carbon, in a form of particles. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of each of the silicon particles. For example, in one or more embodiments, the silicon-carbon composite may include a secondary particle (core) in which silicon primary particles are assembled (e.g., agglomerated) and an amorphous carbon coating layer (shell) on the surface of the secondary particle. In one or more embodiments, the amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of a total weight of the silicon-carbon composite. In addition, if (e.g., when) the silicon-carbon composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of a total weight of the silicon-carbon composite.

In one or more embodiments, a thickness of an amorphous carbon coating layer may be about 5 nanometers (nm) to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). In this regard, an atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

In one or more embodiments, the Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, a mixing ratio thereof may be a weight ratio of about 1:99 to about 90:10.

### Binder

The binder serves to suitably and/or well adhere the negative electrode active material particles to each other and also to adhere the negative electrode active material to the negative electrode current collector. The binder may be a non-aqueous binder (e.g., a water-insoluble binder), an aqueous binder (e.g., a water-soluble binder), a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the binder for the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material may be included to provide electrode conductivity and any electrically conductive material may be used as a conductive material unless it causes a chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

In one or more embodiments, a content (e.g., amount) of the negative electrode active material may be about 95 wt% to about 99.5 wt% based on 100 wt% of a total weight of the negative electrode active material layer, and a content (e.g., amount) of the binder may be about 0.5 wt% to about 5 wt% based on 100 wt% of the total weight of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on 100 wt% of the total weight of the negative electrode active material layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte which may include a non-aqueous organic solvent and a lithium salt.

The non-aqueous organic solvent serves as a medium for transmitting ions taking part in the electrochemical reaction of the rechargeable lithium battery. The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether group), and/or the like; amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is widely suitable to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in some embodiments, a carbonate-based solvent and an aromatic hydrocarbon-based organic solvent may be mixed and used in a volume ratio of about 1:1 to about 30:1.

In one or more embodiments, the electrolyte may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (e.g., any suitable) combination thereof on one or both (e.g., simultaneously) surfaces (e.g., two opposite surfaces) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure will be described in more detail herein. However, the following examples are mere examples of the present disclosure, and the present disclosure is not limited to the following examples.

### Example 1

### 1. Preparation of Positive Electrode Active Material

Nickel-based composite hydroxide (Ni_{0.55}Co_{0.24}Mn_{0.21}(OH)₂) with an average particle diameter (D₅₀) of about 19 µm, which is a large particle precursor, and Li₂CO₃ were mixed to have a molar ratio of Li/(Ni+Co+Mn) = 1.09 and then, primarily heat-treated at 900 °C for 8 hours under an oxygen atmosphere. Subsequently, the heat-treated product, after being crushed and filtered, was mixed with nickel-based composite hydroxide (Ni_{0.55}Co_{0.24}Mn_{0.21}(OH)₂) with an average particle diameter (D₅₀) of about 2.7 µm, which is a small particle precursor, to have a weight ratio of 80:20 between the large particle precursor and the small particle precursor, and Li₂CO₃ was further added thereto to have a molar ratio of Li/(Ni+Co+Mn) = 0.8 in the relationship of total metal of the small particle precursor and Li and then, secondarily heat-treated at 850 °C for 8 hours under an oxygen atmosphere. Subsequently, the heat-treated product was crushed and filtered to obtain a final positive electrode active material.

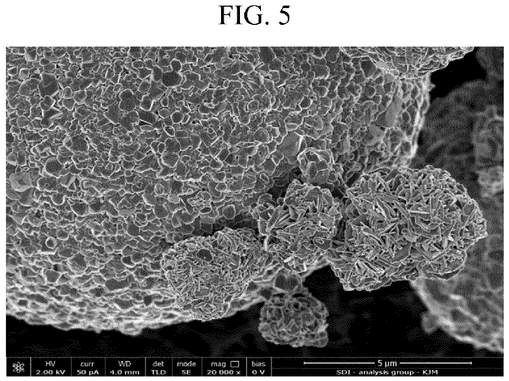

FIG. 5 is an SEM image showing the final positive electrode active material of Example 1. In FIG. 5, observed are large particles (a first positive electrode active material) in the form of secondary particles formed by agglomeration of a plurality of primary particles and small particles (a second positive electrode active material, a third positive electrode active material) in the form of secondary particles formed by the agglomeration of the plurality of primary particles but having a smaller particle diameter than that of the large particles. When measured through the SEM image, the large particles had an average particle diameter (D₅₀) of about 19 µm and the small particles had an average particle diameter (D₅₀) of about 3 µm.

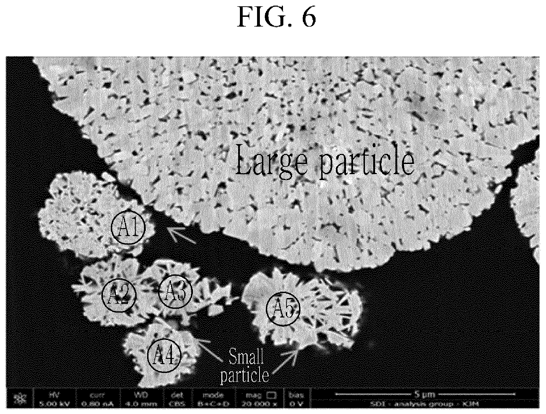

FIG. 6 is an SEM image showing a cross-section of the final positive electrode active material of Example 1, cut by using a focused ion beam (FIB). In FIG. 6, the large particles on top and five small particles below are shown. Each small particle was respectively indicated as A1, A2, A3, A4, and A5. The cross-section of each small particle was measured through a SEM-EDS quantitative analysis to measure each content (e.g., amount) of Ni, Co, and Mn, and the results are shown in Table 1. The SEM-EDS was analyzed using Philips' FEI Titan 80-300 at an acceleration voltage of 15 kV.

**Table 1**

| | Small particle precursor | A1 | A2 | A3 | A4 | A5 |
|---|---|---|---|---|---|---|
| Ni | 55.0 | 55.0 | 57.8 | 57.1 | 57.5 | 57.2 |
| Co | 24.0 | 23.9 | 22.7 | 23.6 | 23.2 | 23.4 |
| Mn | 21.0 | 21.1 | 19.5 | 19.3 | 19.3 | 19.4 |

Referring to FIG. 6 and Table 1, the small particle A1 confirmed that the primary particles forming the secondary particles had no needle-shaped structure and had substantially the same Ni, Co, and Mn contents as those of the small particle precursor. The small particle A1 corresponds to the second positive electrode active material. In contrast, the other small particles A2 to A5 each exhibited that the corresponding secondary particle included needle-shaped primary particles but had a Ni content (e.g., amount) increased by about 2 mol% to about 3 mol% compared to that of the small particle precursor. In addition, each Co and Mn content (e.g., amount) was slightly lower than those of the small particle precursor. These A2 to A5 corresponded to the third positive electrode active material.

Without being bound by any particular theory, it is believed that that a portion of the injected/added small particle precursor contacted and reacted with the lithium-rich large particles to receive lithium and nickel from the large particles, resultantly synthesizing the primary particles to have a needle shape and an increased nickel content (e.g., amount). Likewise, it was understood that as the other portion of the injected/added small particle precursor maintained the nickel content (e.g., amount) as it was, the primary particles also were not changed into the needle-shape but the shapes thereof were remained intact.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the positive electrode active material layer slurry was coated on an aluminum foil current collector and then, dried and compressed to manufacture a positive electrode.

The positive electrode was used with a lithium metal counter electrode and a polytetrafluoroethylene separator interposed therebetween to manufacture an electrode assembly, the electrode assembly was inserted into a battery case, and then, an electrolyte solution prepared by dissolving 1 M LiPF₆ in a mixed solvent of ethylene carbonate and dimethyl carbonate in a volume ratio of 3:7 was injected thereinto to manufacture a rechargeable lithium battery cell (half-cell) in a common method.

### Comparative Example 1

A comparable method of concurrently (e.g., simultaneously) firing a large particle precursor, and a small particle precursor, and Li₂CO₃ was applied. For example, a positive electrode active material and a rechargeable lithium battery cell according to Comparative Example 1 were manufactured in substantially the same manner as in Example 1 except that the final positive electrode active material was obtained by mixing the large particle precursor and the small particle precursor in a weight ratio of 70:30, adding Li₂CO₃ thereto to have a molar ratio of Li/(Ni+Co+Mn)=1.03 in the relationship of the total metal of the large particle precursor and the small particle precursor with Li, and performing the first heat treatment alone at 900 °C for 8 hours.

### Example 2

A positive electrode active material and a rechargeable lithium battery cell were manufactured in substantially the same manner as in Example 1 except that when the large particle precursor and Li₂CO₃ were mixed in Example 1, aluminium oxide was further added thereto in an amount of 0.14 parts by weight of aluminium based on 100 parts by weight of total metals excluding lithium in the large particle precursor to proceed with Al doping, and in addition, when the small particle precursor and Li₂CO₃ were added, aluminium oxide was further added thereto in an amount of 0.1 parts by weight of aluminium based on 100 parts by weight of total metals excluding lithium in the total of the large particle precursor and the small particle precursor to proceed with Al coating by performing the second heat treatment.

### Comparative Example 2

A positive electrode active material and a rechargeable lithium battery cell were manufactured in substantially the same manner as in Comparative Example 1 except that when the large particle precursor, the small particle precursor, and Li₂CO₃ were mixed, aluminium oxide was further added thereto in an amount of 0.14 parts by weight of aluminium based on 100 parts by weight of total metals excluding lithium in the total of the large particle precursor and the small particle precursor to proceed with Al doping, and in addition, after the first heat treatment following by crushing and filtering, aluminium oxide was further added thereto in an amount of 0.1 parts by weight of aluminium based on 100 parts by weight of total metals excluding lithium in the total of the large particle precursor and the small particle precursor to proceed with Al coating by performing the second heat treatment at 850 °C for 8 hours.

### Comparative Example 3

A positive electrode active material and a rechargeable lithium battery cell were manufactured in substantially the same manner as in Example 2 except that when the large particle precursor and Li₂CO₃ were mixed, the molar ratio of Li/(Ni+Co+Mn) was changed to 1.03.

Table 2 briefly shows that manufacturing process designs of the positive electrode active materials of Examples 1 and 2 and Comparative Examples 1 to 3. In addition, the final positive electrode active materials of Examples 1 and 2 and Comparative Examples 1 to 3 were each measured with respect to pellet density, and the results are shown in Table 2. The pellet density (PD) was measured by putting 3 g of each of the positive electrode active materials in a mold (an area: 1.298 cm²), slowly inserting a mold bar to a mold main body, placing the mold set in a hydraulic press, and pressing it at 3 tons (Metric ton) for 30 seconds to measure a height.

### Evaluation Example 1: Evaluation of Initial Charge/discharge Capacity, Efficiency, and Cycle-life Characteristics

The rechargeable lithium battery cells of Examples 1 and 2 and Comparative Examples 1 to 3 were each charged to 4.45 V at a constant current of 0.2 C and to 0.05 C at the constant voltage and then, discharged to 3.0 V at 0.2 C at 25 °C to proceed with initial charging and discharging. In Table 2, initial charge capacity and initial discharge capacity are provided, and a ratio of the latter to the former, which is initial charge/discharge efficiency, also is shown as efficiency in Table 2.

Subsequently, the cells each were 50 times repeatedly charged and discharged at 1.0 C within a voltage range of 3.0 V to 4.45 V at 45 °C. In Table 2, a ratio of 50^{th} discharge capacity to the initial discharge capacity was calculated and provided as a cycle-life.

**Table 2**

| | meth od | Primary fire | prim ary Li/M e | Secon d firing | Al dopi ng (pp m) | Al coati ng (pp m) | Char ge capa city (mAh /g) | Dischar ge capacit y (mAh/g) | effici enc y (%) | cycl e-life (%) | PD (g/c c) |
|---|---|---|---|---|---|---|---|---|---|---|---|
| Exam ple 1 | prese nt disc osure l | large particle precurs or | 1.09 | small particl e precur sor | - | - | 187.1 | 178.3 | 95.3 | 94.7 | 3.3 6 |
| Com parati ve Exam ple 1 | conv entio nal | large particle precurs or +small particle precurs or | 1.03 | - | - | - | 186.8 | 166.8 | 89.3 | 93.6 | 3.4 0 |
| Exam ple 2 | prese nt disc! osure | large particle precurs or | 1.09 | small particl e precur sor +Al coatin 9 | 140 0 | 1000 | 186.5 | 177.4 | 95.1 | 98.1 | 3.3 8 |
| Com parati ve Exam ple 2 | conv entio nal | large particle precurs or +small particle precurs or | 1.03 | Al coatin 9 | 140 0 | 1000 | 186.3 | 165.9 | 89.0 | 95.1 | 3.4 1 |
| Com parati ve Exam ple 3 | prese nt disc osure l | large particle precurs or | 1.03 | small particl e precur sor +Al coatin 9 | 140 0 | 1000 | 186.2 | 169.1 | 90.8 | 98.1 | 3.4 0 |

Referring to Table 2, Example 1, compared to Comparative Example 1, exhibited increased initial discharge capacity, greatly increased initial charge/discharge efficiency, and improved cycle-life characteristics. Similarly, Example 2, compared to Comparative Examples 2 and 3, exhibited increased initial discharge capacity, greatly increased initial charge/discharge efficiency, and improved cycle-life characteristics.

Comparative Example 3, to which the Li content (e.g., amount) introduced during the first heat treatment was reduced to have a Li molar ratio of 1.03 based on the total metals excluding Li in the large particle precursor, exhibited that lithium-rich large particles were not sufficiently formed, failing in forming small particles such as the third positive electrode active material, which confirmed that the initial discharge capacity did not increase much, so there was no aspect of improving initial charge/discharge efficiency.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A device of preparing a positive electrode active material, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be example embodiments, it is to be understood that present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a first positive electrode active material comprising a first lithium nickel-based composite oxide and being in a form of secondary particles each comprising a plurality of primary particles, wherein an average particle diameter (D₅₀) of the secondary particles is 10 µm to 25 µm;
a second positive electrode active material comprising a second lithium nickel-based composite oxide and being in a form of secondary particles each comprising a plurality of primary particles, wherein an average particle diameter (D₅₀) of the secondary particles is 0.5 µm to 8 µm; and
a third positive electrode active material comprising a third lithium nickel-based composite oxide and being in a form of secondary particles each comprising a plurality of primary particles, wherein an average particle diameter (D₅₀) of the secondary particles is 0.5 µm to 8 µm,
wherein the primary particles constituting the secondary particles of the third positive electrode active material are in a form of needles, and
wherein a nickel content of the third lithium nickel-based composite oxide based on 100 mol% of a total metal excluding lithium in the third lithium nickel-based composite oxide is higher than a nickel content of the second lithium nickel-based composite oxide based on 100 mol% of a total metal excluding lithium in the second lithium nickel-based composite oxide.

2. The positive electrode active material as claimed in claim 1, wherein
the nickel content of the third lithium nickel-based composite oxide based on 100 mol% of the total metal excluding lithium in the third lithium nickel-based composite oxide is 1 mol% to 5 mol% higher than the nickel content of the second lithium nickel-based composite oxide based on 100 mol% of the total metal excluding lithium in the second lithium nickel-based composite oxide.

3. The positive electrode active material as claimed in claim 1 or claim 2, wherein
the second lithium nickel-based composite oxide and the third lithium nickel-based composite oxide further comprise a metal M other than lithium and nickel, and
a content of the metal M in the third lithium nickel-based composite oxide based on 100 mol% of the total metal excluding lithium in the third lithium nickel-based composite oxide is 1 mol% to 5 mol% lower than a content of the metal M in the second lithium nickel-based composite oxide based on 100 mol% of the total metal excluding lithium in the second lithium nickel-based composite oxide.

4. The positive electrode active material as claimed in any one of claims 1 to 3, wherein:
(i) the secondary particles of the third positive electrode active material have a spherical shape, an ellipsoidal shape, a polygonal shape, an irregular shape, or a combination thereof, but do not have a needle-shape; and/or
(ii) the primary particles constituting the secondary particles in the second positive electrode active material have a spherical shape, an ellipsoidal shape, a polygonal shape, a plate shape, an irregular shape, or a combination thereof, but do not have a needle-shape.

5. The positive electrode active material as claimed in any one of claims 1 to 4, wherein
a nickel content of the first lithium nickel-based composite oxide based on 100 mol% of a total metal excluding lithium in the first lithium nickel-based composite oxide, the nickel content of the second lithium nickel-based composite oxide based on 100 mol% of the total metal excluding lithium in the second lithium nickel-based composite oxide, and the nickel content of the third lithium nickel-based composite oxide based on 100 mol% of the total metal excluding lithium in the third lithium nickel-based composite oxide are each independently 50 mol% to 99 mol%, optionally wherein
the nickel content of the first lithium nickel-based composite oxide based on 100 mol% of the total metal excluding lithium in the first lithium nickel-based composite oxide, the nickel content of the second lithium nickel-based composite oxide based on 100 mol% of the total metal excluding lithium in the second lithium nickel-based composite oxide, and the nickel content of the third lithium nickel-based composite oxide based on 100 mol% of the total metal excluding lithium in the third lithium nickel-based composite oxide are each independently 50 mol% to 70 mol%.

6. The positive electrode active material as claimed in any one of claims 1 to 5, wherein
the first lithium nickel-based composite oxide is represented by Chemical Formula 1, the second lithium nickel-based composite oxide is represented by Chemical Formula 3, and the third lithium nickel-based composite oxide is represented by Chemical Formula 5:
Chemical Formula 1 Liₐ₁Niₓ₁M¹_{y1}O_{2-b1}X_{b1}
in Chemical Formula 1, 0.9≤a1≤1.2, 0.5≤x1<1, 0<y1≤0.5, 0.9≤x1+y1≤1.1, and 0≤b1≤0.1, M¹ being one or more elements selected from among Al, B, Ba, Ca, Ce, Co, Cr, Cu, Fe, Mg, Mn, Mo, Nb, Si, Sn, Sr, Ti, V, W, Y, Zn, and Zr, and X being one or more elements selected from among F, P, and S,
Chemical Formula 3 Liₐ₃Niₓ₃M⁴_{y3}O_{2-b3}X_{b3}
in Chemical Formula 3, 0.9≤a3≤1.2, 0.5≤x3<1, 0<y3≤0.5, 0.9≤x3+y3≤1.1, and 0≤b3≤0.1, M⁴ being one or more elements selected from among Al, B, Ba, Ca, Ce, Co, Cr, Cu, Fe, Mg, Mn, Mo, Nb, Si, Sn, Sr, Ti, V, W, Y, Zn, and Zr, and X being one or more elements selected from among F, P, and S,
Chemical Formula 5 Liₐ₅Niₓ₅M⁷_{y5}O_{2-b5}X_{b5}
in Chemical Formula 5, 0.9≤a5≤1.2, 0.5≤x5<1, 0<y5≤0.5, 0.9≤x5+y5≤1.1, and 0≤b5≤0.1, M⁷ being one or more elements selected from among Al, B, Ba, Ca, Ce, Co, Cr, Cu, Fe, Mg, Mn, Mo, Nb, Si, Sn, Sr, Ti, V, W, Zn, and Zr, and X being one or more elements selected from among F, P, and S.

7. The positive electrode active material as claimed in any one of claims 1 to 6, wherein
based on 100 wt% of a total weight of the first positive electrode active material, the second positive electrode active material, and the third positive electrode active material,
the first positive electrode active material is in an amount of 60 wt% to 85 wt%, and
a sum amount of the second positive electrode active material and the third positive electrode active material is 15 wt% to 40 wt%.

8. The positive electrode active material as claimed in any one of claims 1 to 7, wherein
based on 100 wt% of a total weight of the second positive electrode active material and the third positive electrode active material,
the second positive electrode active material is in an amount of 10 wt% to 90 wt%, and the third positive electrode active material is in an amount of 10 wt% to 90 wt%.

9. A method of preparing a positive electrode active material, comprising mixing a first nickel-based hydroxide having an average particle diameter (D₅₀) of 10 µm to 25 µm and a first lithium raw material so that a molar ratio of lithium in the first lithium raw material to a total metal of the first nickel-based hydroxide is greater than or equal to 1.09, and performing a first heat treatment to obtain a first heat treatment product, and
mixing the first heat treatment product, a second nickel-based hydroxide having an average particle diameter (D₅₀) of 0.5 µm to 8 µm, and a second lithium raw material and performing a second heat treatment.

10. The method as claimed in claim 9, wherein:
(i) the molar ratio of lithium in the first lithium raw material to the total metal of the first nickel-based hydroxide is 1.09 to 1.2; and/or
(ii) a molar ratio of lithium in the second lithium raw material to a total metal of the second nickel-based hydroxide is less than 1.

11. The method as claimed in claim 9 or claim 10, wherein:
(i) the first heat treatment is performed at a temperature range of 750 °C to 1000 °C, and
the second heat treatment is performed at a temperature range of 700 °C to 900 °C; and/or
(ii) a mixing ratio of the first nickel-based hydroxide to the second nickel-based hydroxide is a weight ratio of 60:40 to 85:15.

12. The method as claimed in any one of claims 9 to 11, wherein
when the first heat treatment product, the second nickel-based hydroxide, and the second lithium raw material are mixed, a coating raw material is added thereto and the second heat treatment is performed, optionally wherein
the coating raw material is aluminium raw material, and
the aluminium raw material is mixed so that an aluminium content of the first heat treatment product and the second nickel-based hydroxide is 0.1 to 2 parts by weight based on 100 parts by weight of a total metal excluding lithium in the first heat treatment product and the second nickel-based hydroxide.

13. The method as claimed in any one of claims 9 to 12, wherein
the method further comprises crushing process after the first heat treatment and/or the second heat treatment.

14. A positive electrode, comprising the positive electrode active material as claimed in any one of claims 1 to 8.

15. A rechargeable lithium battery, comprising
the positive electrode as claimed in claim 14,
a negative electrode, and
an electrolyte.
